# EUROPÄISCHE PATENTSCHRIFT

(11) **EP 3 124 153 B1**
(45) Veröffentlichungstag und Bekanntmachung des Hinweises auf die Patenterteilung: **02.09.2020**
(21) Anmeldenummer: 16179005.0
(22) Anmeldetag: 12.07.2016
(51) Int. Cl.: B23D 65/00

(54) **VORRICHTUNG ZUM BEARBEITEN VON WERKSTÜCKEN, INSBESONDERE VON SÄGEBLÄTTERN**
DEVICE FOR MACHINING WORKPIECES, IN PARTICULAR SAW BLADES
DISPOSITIF D'USINAGE DE PIÈCES À USINER, NOTAMMENT DES LAMES DE SCIE

(30) Priorität: 31.07.2015 DE 102015010004
(43) Veröffentlichungstag der Anmeldung: 01.02.2017
(73) Patentinhaber: VOLLMER WERKE MASCHINENFABRIK GMBH, 88400 Biberach/Riss (DE)
(72) Erfinder: EHINGER, Karl, 88400 Biberach (DE); LENARD, Peter, 88400 Biberach (DE); BAILER, Peter, 88433 Schemmerhofen (DE); SCHLANSER, Bernhard, 88447 Warthausen (DE); HUTZEL, Edgar, 88444 Ummendorf (DE)
(74) Vertreter: Thum, Bernhard

(56) Entgegenhaltungen:
- DE-A1- 10 040 493
- JP-A- 2002 326 122
- JP-A- 2007 175 808
- KR-B1- 101 355 089
- US-A- 4 449 427

## Beschreibung

Die vorliegende Erfindung betrifft eine Vorrichtung zum Bearbeiten von Werkstücken, gemäß dem Oberbegriff des Anspruchs 1. Eine solche Vorrichtung ist aus KR 101 355 089 B bekannt.

Werkstücke und insbesondere Sägeblätter müssen häufig an verschiedenen Stationen mittels verschiedener Maschinen bearbeitet werden, da alle zur Bearbeitung des Sägeblatts notwendigen Bearbeitungsschritte häufig nicht mit einer einzigen Maschine ausgeführt werden können. Bei Sägeblättern müssen beispielsweise die Zähne an verschiedenen Stellen wie Zahnbrust, Zahnflanken und Zahnrücken geschliffen werden. Für diese Arbeitsschritte werden zumeist verschiedene Bearbeitungsmaschinen oder Maschineneinstellungen benötigt. Dies bedeutet, dass die Werkstücke bzw. die Sägeblätter zwischen verschiedenen Bearbeitungsmaschinen hin und her transportiert und die Bearbeitungsmaschinen jeweils Beladen und Entladen werden müssen, bis aus einem Rohling ein fertig bearbeitetes Werkstück oder Sägeblatt entsteht. Dieser Transport zwischen den einzelnen Bearbeitungsstationen zur Bearbeitung des Werkstücks ist mit einem relativ großen Zeit- und/oder Personalaufwand verbunden und damit kostenintensiv. Insbesondere die Beladung und Entladung der einzelnen Bearbeitungsmaschinen ist relativ zeitintensiv, selbst wenn die Beladung und Entladung über automatisierte Beladungs- und Entladungsvorrichtungen erfolgt. Ferner müssen die Werkstücke einer solchen Anlage zugeführt und auch wieder abgeführt werden.

KR 101 355 089 B offenbart eine erste Transportvorrichtung, eine zweite Transportvorrichtung und eine dritte Transportvorrichtung, die mit einer Führungsschiene verbunden sind. Die Transportvorrichtungen werden über einen Linearaktuator angetrieben.

US 4 449 427 A1 offenbart eine Bearbeitungsmaschine für Kreissägeblätter. Die Bearbeitungsmaschine weist ein Maschinengehäuse auf. Um das Maschinengehäuse herum ist eine Transporteinrichtung für die Kreissägeblätter vorgesehen. Die Transporteinrichtung fördert die Kreissägeblätter schrittweise von der Beschickungs-und Entnahmestation nacheinander zu den Bearbeitungsstationen und zurück zur Beschickungs-und Entnahmestation.

Es ist eine Aufgabe der vorliegenden Erfindung eine Vorrichtung zum Bearbeiten von Werkstücken bereitzustellen, die eine schnelle aufeinanderfolgende Bearbeitung von Werkstücken und gleichzeitig kurze Belade- und Entladezeiten ermöglicht.

Diese Aufgabe wird mit einer Vorrichtung zum Bearbeiten von Werkstücken, insbesondere von Sägeblättern, mit den Merkmalen des Anspruchs 1 gelöst.

Weitere Ausführungsformen sind in den beigefügten abhängigen Ansprüchen angegeben.

Der Begriff "zur Werkstückübergabe ansteuerbar" bedeutet bei einer Bearbeitungsstation in diesem Zusammenhang, dass sich die wenigstens eine Transportvorrichtung in eine Position bewegt, an der eine Bearbeitungsstation mit einem Werkstück bestückt, oder an der nach der Bearbeitung das Werkstück aufgenommen werden kann. Bei der Aufnahmestation ist der Begriff "zur Werkstückübergabe ansteuerbar" als das Aufnehmen des Werkstücks und bei der Abgabestation als das Abgeben des Werkstücks zu verstehen. Die Transportvorrichtung kann somit gleichzeitig beispielsweise ein Werkstück an der Aufnahmestation aufnehmen und ein weiteres Werkstück von einer Bearbeitungsstation aufnehmen. Im Anschluss daran kann sich die wenigstens eine Transportvorrichtung relativ zu den Stationen bewegen und das gerade bearbeitete Werkstück an der Abgabestation ablegen und die wenigstens eine Bearbeitungsstation mit einem neuen zu bearbeitenden Werkstück bestücken.

Die wenigstens eine Transportvorrichtung ermöglicht somit zumindest das gleichzeitige Ansteuern von wenigstens zwei Stationen zur Werkstückübergabe, wodurch die Bearbeitung von Werkstücken, insbesondere von Sägeblättern erheblich vereinfacht und beschleunigt wird. Zudem können mit der wenigstens einen Transportvorrichtung die Belade- und Entladezeiten der einzelnen Stationen erheblich reduziert werden. Die wenigstens eine Transportvorrichtung ermöglicht somit die Bewegung von zumindest zwei Werkstücken gleichzeitig.

Die Vorrichtung zum Bearbeiten von Werkstücken gemäß der Erfindung kann eine Mehrzahl von Bearbeitungsstationen aufweisen, an denen aufeinanderfolgend verschiedene Bearbeitungsschritte an einem zu bearbeitenden Werkstück durchgeführt werden. Das zu bearbeitende Werkstück wird von der wenigstens einen Transportvorrichtung von einer Bearbeitungsstation zur nächsten Bearbeitungsstation verlagert. Im beispielhaften Fall eines Sägeblatts als Werkstück können mehrere Bearbeitungsstationen jeweils mit Schleifeinrichtungen versehen sein, die beispielsweise einmal die Flanken der Zähne des Sägeblatts und im Anschluss daran die Brust oder den Rücken der Zähne des Sägeblatts schleifen. Die erfindungsgemäße Vorrichtung kann scheibenförmige Werkstücke und insbesondere Kreissägeblätter bearbeiten.

Gemäß einer Ausführungsform kann die wenigstens eine Transportvorrichtung derart ausgebildet sein, dass entweder die wenigstens eine Aufnahmestation oder die wenigstens eine Abgabestation und zusätzlich wenigstens eine Bearbeitungsstation von der wenigstens einen Transportvorrichtung zur Werkstückübergabe ansteuerbar sind. Die wenigstens eine Transportvorrichtung kann sich dementsprechend entweder zumindest an der Abgabestation und der wenigstens einen Bearbeitungsstation oder zumindest an der wenigstens einen Bearbeitungsstation und der wenigstens einen Abgabestation befinden. Auf diese Weise kann ein Werkstück zwischen den einzelnen Stationen der Vorrichtung mittels der wenigstens einen Transportvorrichtung bewegt werden. Dabei kann die wenigstens eine Transportvorrichtung derart dimensioniert sein, dass sie zumindest den Abstand zwischen wenigstens zwei Stationen überspannt.

Die wenigstens eine Transportvorrichtung ist derart ausgebildet, dass sie sich linear in einer ersten Bewegungsrichtung relativ zu den Stationen bewegt. In der ersten Bewegungsrichtung kann die wenigstens eine Transportvorrichtung zur Abgabestation und zurück zur Aufnahmestation bewegt werden. Beide Bewegungen können lineare Bewegungen sein.

Die wenigstens eine Transportvorrichtung kann derart ausgebildet sein, dass sie sich zwischen der wenigstens einen Aufnahmestation und der wenigstens einen Abgabestation hin- und her-bewegt. Diese Hin- und Her-Bewegung kann, wie voranstehend erwähnt wurde, linear verlaufen. Die Hin- und Her-Bewegung ermöglicht, dass bei jeder Bewegung Werkstücke aufgenommen und Werkstücke abgegeben und gleichzeitig die wenigstens eine Bearbeitungsstation mit Werkstücken bestückt oder von Werkstücken entladen werden kann.

Gemäß einer Weiterbildung der Erfindung ist die wenigstens eine Transportvorrichtung derart ausgebildet, dass das wenigstens eine Werkstück zur Aufnahme oder Übergabe an wenigstens eine Station in wenigstens einer zweiten Bewegungsrichtung relativ zu wenigstens dieser einen Station verlagerbar ist. Mit anderen Worten kann die Transportvorrichtung sich zum Bedienen der einzelnen Stationen an diese Stationen in einer zweiten Bewegungsrichtung annähern bzw. von diesen Stationen in einer zweiten Bewegungsrichtung entfernen, bevor die weitere Bewegung in der ersten oder der zweiten Bewegungsrichtung erfolgt. Die wenigstens eine Transportvorrichtung kann somit in der zweiten Bewegungsrichtung hin- und her-bewegt werden. Die wenigstens eine Transportvorrichtung kann somit in eine Übergabeposition übergehen, in der Werkstücke von den Stationen aufgenommen oder an die Stationen abgegeben werden können. Die dritte Bewegungsrichtung kann senkrecht zu der ersten und der zweiten Bewegungsrichtung verlaufen.

Gemäß einer Ausführungsform der Erfindung kann die wenigstens eine Transportvorrichtung wenigstens eine Greifeinrichtung zum Greifen wenigstens eines Werkstücks aufweisen. Die wenigstens eine Transportvorrichtung kann ebenfalls eine Mehrzahl von Greifeinrichtungen aufweisen, die jeweils ein Werkstück greifen können. Die Anzahl der Greifeinrichtungen kann dabei auf die Anzahl der Stationen abgestimmt werden, die gleichzeitig von der Transportvorrichtung bedient werden sollen. Die wenigsten eine Transportvorrichtung kann derart ausgebildet sein, dass die wenigstens eine Greifeinrichtung in der zweiten Bewegungsrichtung relativ zu den Stationen verlagerbar ist. Die wenigstens eine Greifeinrichtung kann wenigstens einen Schlitten aufweisen, der in der zweiten Bewegungsrichtung hin- und her-bewegbar ist.

Die wenigstens eine Aufnahmestation und/oder die wenigstens eine Abgabestation können wenigstens eine Einrichtung zum Anheben und Absenken wenigstens eines Werkstücks aufweisen. Die Einrichtung zum Anheben und Absenken kann dafür verwendet werden, Werkstückrohlinge von einem Stapel an Werkstückrohlingen aufzunehmen und an einer vorbestimmten Aufnahmestelle der Aufnahmestation an die wenigstens eine Transportvorrichtung zu übergeben. Die Einrichtung zum Anheben und Absenken des wenigstens einen Werkstücks an der Abgabestation kann dazu dienen, das wenigstens eine fertig bearbeitete Werkstück von der wenigstens einen Transportvorrichtung an einer vorbestimmten Abgabestelle der Abgabestation zu übernehmen. Alternativ kann auch wenigstens ein externes System vorgesehen sein, das die Werkstücke an der wenigstens einen Aufnahmestation an die wenigstens eine Transportvorrichtung übergibt, oder an der wenigstens einen Abgabestation von der wenigstens einen Transportvorrichtung übernimmt. Ein derartiges externes System kann beispielsweise ein Roboter sein. Es kann an der Aufnahmestation und der Abgabestation jeweils ein Roboter zum Handhaben der Werkstücke vorgesehen sein.

Die wenigstens eine Aufnahmestation und/oder die wenigstens eine Abgabestation können wenigstens eine Schwenkeinrichtung zum Schwenken wenigstens eines Werkstücks aus einer horizontalen Lage in eine vertikale Lage oder umgekehrt aufweisen. Die Werkstücke können von der wenigstens einen Transportvorrichtung beispielsweise in einer horizontalen Lage aufgenommen werden. Die Aufnahmestation kann beispielsweise mit gestapelten Werkstücken bestückt werden, die sich in einer horizontalen Lage befinden. Nach der Bearbeitung können die Werkstücke in einer horizontalen Lage an die Abgabestation übergeben werden. Im Anschluss daran kann das Werkstück von der wenigstens einen Schwenkeinrichtung aus der vertikalen Lage zum Stapeln in eine horizontale Lage umgesetzt werden.

Gemäß einer Ausführungsform der Erfindung kann die wenigstens eine Transportvorrichtung wenigstens einen Träger aufweisen, der zumindest die Distanz zwischen zwei Bearbeitungsstationen überspannt. Die wenigstens eine Greifeinrichtung kann an dem wenigstens einen Träger angeordnet sein. Der wenigstens eine Träger kann sich relativ zu den Stationen bewegen. Der wenigstens eine Träger kann in diesem Zusammenhang beispielsweise mit einem Linearschlitten gekoppelt und von diesem angetrieben werden. Umfasst die wenigstens eine Greifeinrichtung einen Schlitten zur Bewegung der Greifeinrichtung in der zweiten Bewegungsrichtung, kann der wenigstens eine Schlitten an dem wenigstens einen Träger angebracht und relativ zu dem Träger verlagerbar sein.

Die wenigstens eine Bearbeitungsstation kann wenigstens eine Werkstückaufnahme aufweisen. Die wenigstens eine Werkstückaufnahme kann derart ausgebildet sein, dass sie von der wenigstens einen Transportvorrichtung mit einem Werkstück bestückt werden kann und die wenigstens eine Transportvorrichtung ein Werkstück von der Bearbeitungsstation aufnehmen kann.

Gemäß einer Ausführungsform der Erfindung kann eine Mehrzahl von Bearbeitungsstationen vorgesehen sein. Die wenigstens eine Transportvorrichtung kann eine Mehrzahl von Greifeinrichtungen aufweisen. Die Anzahl von Greifeinrichtung kann um 1 größer sein als die Anzahl der Bearbeitungsstationen. Die wenigstens eine Transportvorrichtung bewegt sich zwischen der wenigstens einen Aufnahmestation und der wenigstens einen Abgabestation hin- und her. Um dies zu ermöglichen, überspannt die wenigstens eine Transportvorrichtung die Distanz zwischen beispielsweise der wenigstens einen Aufnahmestation und der wenigstens einen Bearbeitungsstation. Diese Distanz entspricht auch der Distanz zwischen der wenigstens einen Bearbeitungsstation und der wenigstens einen Abgabestation. Bei drei Stationen bedeutet dies beispielsweise, dass die Transportvorrichtungen zwei Greifeinrichtungen aufweist und die Distanz zwischen zwei Stationen überspannt. Dadurch wird sichergestellt, dass die Transportvorrichtung zumindest zwei Werkstücke gleichzeitig bewegen kann und zumindest zwei Stationen gleichzeitig bedienen kann.

Gemäß einer Ausführungsform der Erfindung kann die wenigstens eine Bearbeitungsstation in wenigstens einem (Maschinen-) Gehäuse aufgenommen sein. An diesem Gehäuse können auch die wenigstens eine Aufnahmestelle und die wenigstens eine Abgabestelle der wenigstens einen Aufnahmestation und der wenigstens einen Abgabestation ausgebildet sein. Die Aufnahmestelle und die Abgabestelle können jeweils ein abnehmbares Gehäuseteil aufweisen.

Die wenigstens eine Transportvorrichtung ist derart ausgebildet, dass die wenigstens eine Transportvorrichtung in einer dritten Bewegungseinrichtung verlagerbar ist. In der dritten Bewegungsrichtung ist die Position der wenigstens einen Transportvorrichtung in vertikaler Richtung eingestellt. Dadurch kann die Position der wenigstens einen Transportvorrichtung an die Dimensionen eines zu bearbeitenden Werkstücks angepasst werden, um größere und kleinere Werkstücke zwischen den einzelnen Stationen verlagern zu können. Die Transportvorrichtung kann zur Verlagerung in einer dritten Bewegungsrichtung wenigstens eine Verlagerungseinrichtung aufweisen, die der wenigstens einen Bearbeitungsstation zugeordnet ist. Der wenigstens eine Träger der wenigstens einen Transportvorrichtung kann in der ersten Bewegungsrichtung und der zweiten Bewegungsrichtung relativ zu der Verlagerungseinrichtung verlagerbar sein. Das heißt, dass die wenigstens eine Verlagerungseinrichtung in der ersten und zweiten Bewegungsrichtung nicht verlagerbar ist. Die Verlagerungseinrichtung kann beispielsweise ein Schlitten oder ein Hubzylinder sein.

Die erste, zweite und dritte Bewegungsrichtung können senkrecht zueinander verlaufen.

Im Folgenden wird eine beispielhafte Ausführungsform der Erfindung mit Bezug auf die beigefügten Figuren beschrieben.
- Figuren 1 und 2: zeigen perspektivische Ansichten der Vorrichtung gemäß der Erfindung;
- Figuren 3 bis 5: zeigen weitere Ansichten der Vorrichtung gemäß der Erfindung;
- Figur 6: zeigt eine teilweise aufgebrochene Ansicht der Vorrichtung gemäß der Erfindung;
- Figuren 7 bis 10: zeigen Einzelteildarstellungen einzelner Komponenten der erfindungsgemäßen Vorrichtung;
- Figur 11: zeigt eine perspektivische Ansicht einer Transportvorrichtung und einer Bearbeitungsstation der Vorrichtung gemäß der Erfindung; und
- Figur 12: zeigt eine Seitenansicht der Transportvorrichtung.

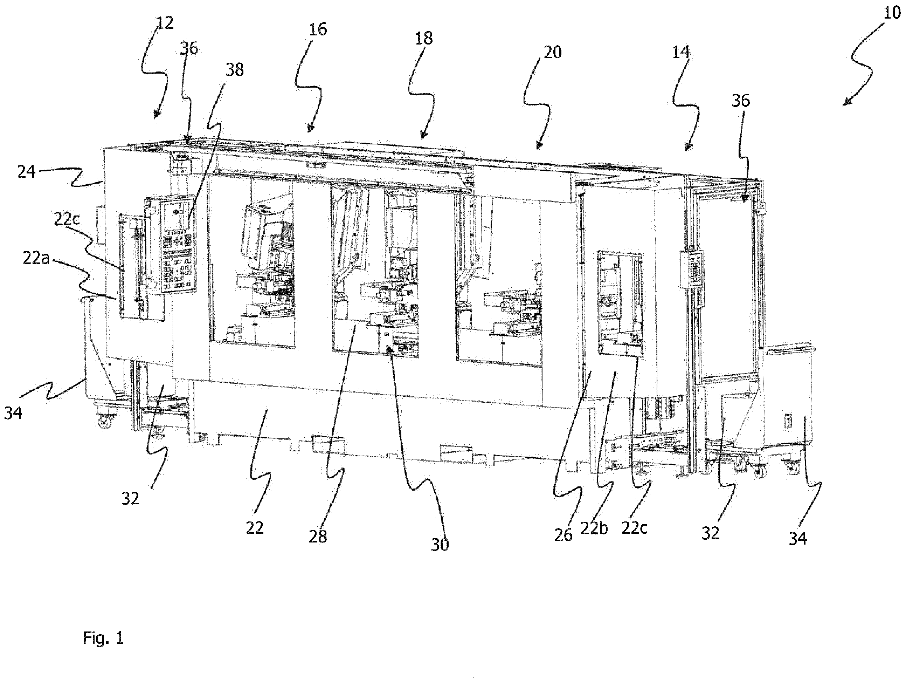

Figur 1 zeigt eine perspektivische Ansicht der Vorrichtung 10.

Die Vorrichtung 10 umfasst eine Aufnahmestation 12 und eine Abgabestation 14. Zwischen der Aufnahmestation 12 und der Abgabestation 14 sind eine erste Bearbeitungsstation 16, eine zweite Bearbeitungsstation 18 und eine dritte Bearbeitungsstation 20 vorgesehen. Die Bearbeitungsstationen 16, 18 und 20 sind in einem (Maschinen-) Gehäuse 22 aufgenommen. An dem Gehäuse 22 ist eine Aufnahmestelle 24 und eine Abgabestelle 26 ausgebildet. Die Aufnahmestelle 24 und die Abgabestelle 26 werden jeweils von einem Gehäuseteil 22a und einem Gehäuseteil 22b gebildet, die abnehmbar an dem Gehäuse 22 befestigt sind. In den Gehäuseteilen 22a und 22b sind Öffnungen 22c ausgebildet.

In dem Gehäuse 22 ist ferner ein Träger 28 einer Transportvorrichtung 30 erkennbar. Der Träger 28 der Transportvorrichtung 30 befindet sich gerade an den Bearbeitungsstationen 16, 18, 20 und an der Abgabestation 14. Der Träger 28 kann somit die Stationen 16, 18, 20 und 14 gleichzeitig bedienen. An der Aufnahmestelle 24 kann der Träger 28 mit Werkstücken 32 bestückt werden. Durch die Gehäuse 22a und 22b wird die Transportvorrichtung 30 zumindest teilweise gekapselt, so dass bei der Bewegung der Transportvorrichtung 30 keine Behinderungen auftreten können. In der in Figur 1 gezeigten Position des Trägers 28 übergibt der Träger 28 ein fertig bearbeitetes Werkstück 32 an der Abgabestelle 26 an die Abgabestation 14. Die Aufnahmestation 12 und die Abgabestation 14 weisen jeweils einen Wagen 34 auf, mit dem die Werkstücke 32 transportiert werden können. Die Aufnahmestation 12 und die Abgabestation 14 umfassen jeweils eine Einrichtung 36 zum Anheben bzw. Absenken und Schwenken der Werkstücke 32. An dem Gehäuse 22 ist ferner ein Steuerungspanel 38 angebracht.

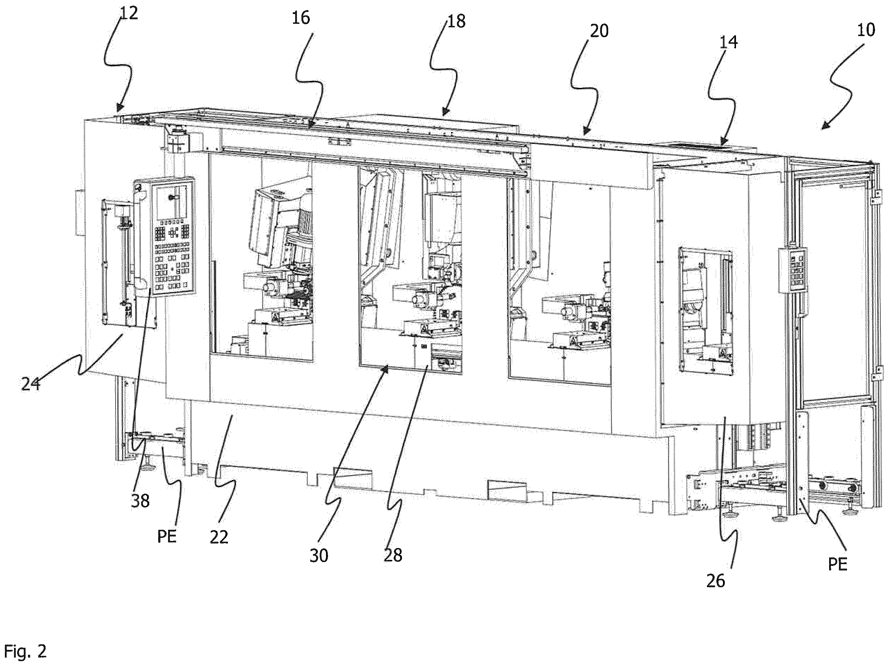

Figur 2 zeigt eine weitere perspektivische Ansicht der Vorrichtung 10 mit verglichen mit Figur 1 leicht verändertem Blickwinkel.

In Figur 2 sind die Wagen 34 nicht gezeigt. Dafür ist die Positioniereinrichtung PE zum Sichern und Positionieren der Wagen 34 in einer vorbestimmten Position an der Aufnahmestation 14 und der Abgabestation 12 erkennbar.

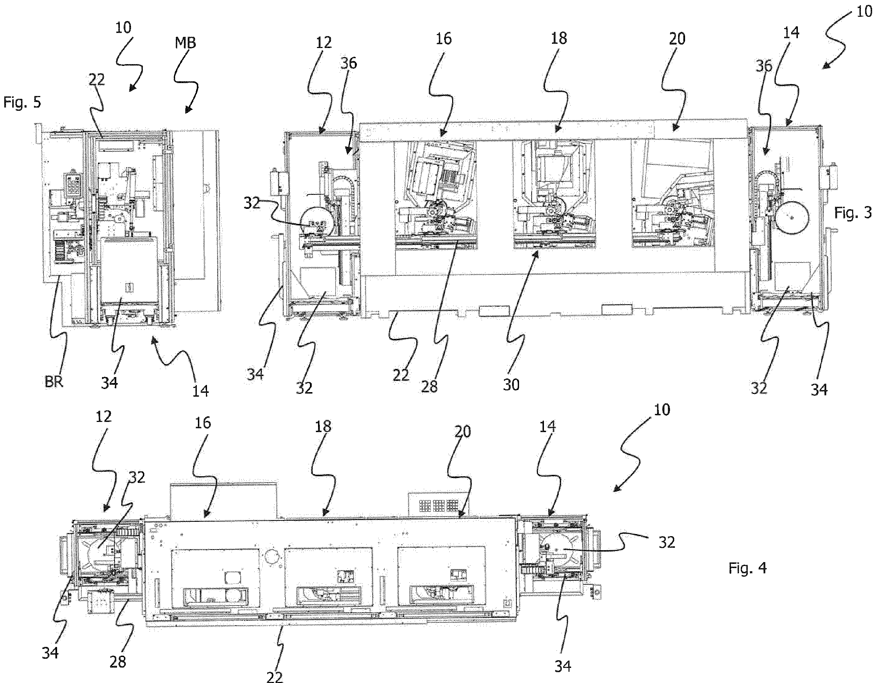

Figur 3 zeigt eine Vorderansicht der Vorrichtung 10.

In der Vorderansicht gemäß Figur 3 sind die Aufnahmestation 12, die drei Bearbeitungsstationen 16, 18, 20 und die Abgabestation 14 gezeigt. In Figur 3 sind die Gehäuseteile 22a und 22b, die die Abgabestellen 24 und 26 definieren (siehe Figuren 1 und 2), entfernt worden.

Der Träger 28 der Transportvorrichtung 30 befindet sich an der Aufnahmestation 12 und an den Bearbeitungsstationen 16, 18 und 20. An der Aufnahmestation 12 wird der Träger 28 von der Hebe-/Schwenkeinrichtung 36 mit einem Werkstück 32 bestückt. Die Werkstückrohlinge 32 sind in einer horizontalen Lage auf dem Wagen 34 gestapelt. Die Hebe-/Schwenkeinrichtung 36 hebt einen Rohling 32 an, schwenkt diesen in die vertikale Lage und übergibt ihn an die Transportvorrichtung 30 bzw. den Träger 28. Bei dem nächsten Arbeitsvorgang wird die Transportvorrichtung 30 in Figur 3 nach rechts bewegt und kann dann ein fertig bearbeitetes Werkstück 32 an die Abgabestation 14 übergeben. Während dieses Arbeitsschritts wird das Werkstück 32, das in der Aufnahmestation 12 an den Träger 28 übergeben wurde, an die erste Bearbeitungsstation 16 übergeben. Das Werkstück 32, das sich in der in Figur 3 gezeigten Position des Trägers 28 in der ersten Bearbeitungsstation 16 befindet, wird an die zweite Bearbeitungsstation 18 übergeben. Auch das sich in der zweiten Bearbeitungsstation 18 befindliche Werkstück 32 wird durch die Bewegung des Trägers 28 nach rechts an die dritte Bearbeitungsstation 20 übergeben. Das sich in der dritten Bearbeitungsstation 20 befindliche Werkstück 32 wird dann an die Abgabestation 14 übergeben und von der Absenk-/Schwenkeinrichtung 36 angenommen, in die horizontale Lage verschwenkt und auf dem Stapel des Wagens 34 abgelegt.

Figur 4 zeigt eine Draufsicht der Transportvorrichtung 10. Auch in Figur 4 befindet sich der Träger 28 in seiner linken Position an der Aufnahmestation 12. Der Träger 28 erstreckt sich somit von der Aufnahmestation 12 bis zur dritten Bearbeitungsstation 20.

Figur 5 zeigt eine Seitenansicht der Vorrichtung 10. In der Seitenansicht gemäß Figur 5 sind das Gehäuse 22 und einer der Wagen 34 erkennbar, der sich an der Abgabestation 14 befindet. Das Gehäuse 22 kann in einen Bearbeitungsbereich BR und einen Maschinenbereich MB unterteilt werden. Im Maschinenbereich MB befinden sich die Antriebe und dergleichen, wohingegen im Bearbeitungsbereich BR die eigentliche Bearbeitung der Werkstücke stattfindet.

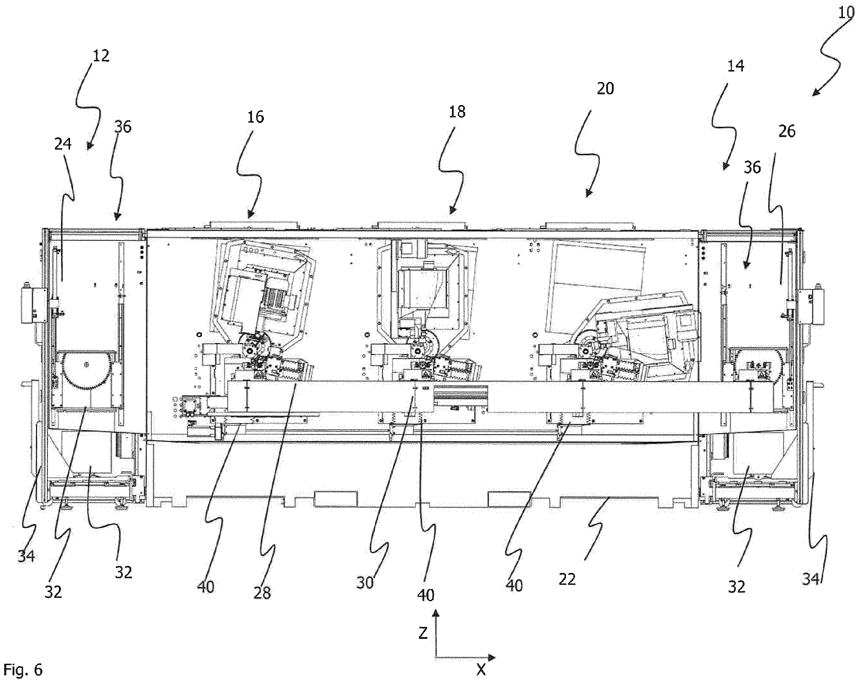

Figur 6 zeigt eine Vorderansicht, in der teilweise das Gehäuse 22 entfernt wurde.

Der Träger 28 der Transportvorrichtung 30 erstreckt sich gemäß Figur 6 linear zwischen der ersten Bearbeitungsvorrichtung 16 und der Abgabestation 14. In der Aufnahmestation 12 wird ein Werkstück 32, d. h. ein Sägeblatt, von der Hebe-/Schwenkeinrichtung 36 bereitgestellt, und an der Aufnahmestelle 24 an die Transportvorrichtung 30 übergeben. Der Träger 28 kann bei einer Bewegung nach links mit dem Werkstück 32 an der Aufnahmestelle 24 der Aufnahmestation 12 bestückt werden. Anstelle der Hebe/Schwenkeinrichtungen 36 können auch externe Systeme wie beispielsweise Roboter vorgesehen sein, die die Werkstücke für die Transportvorrichtung 30 bereitstellen und von dieser übernehmen können.

Der Träger 28 bewegt sich zwischen der Aufnahmestation 12 und der Abgabestation 14 linear hin- und her, wobei die Werkstücke 32, hier Kreissägeblätter, zwischen den einzelnen Stationen 12 bis 20 verlagert werden, bis ein fertig bearbeitetes Werkstück an der Abgabestation 14 abgegeben werden kann. Die Transportvorrichtung 30 bzw. der Träger 28 bewegt sich in X-Richtung zwischen Abgabestation 14 und der Aufnahmestation 12 hin- und her.

Die Position der Transportvorrichtung 30 kann in Z-Richtung, d.h. in Figur 6 in vertikaler Richtung, verändert werden. Dazu weist die Transportvorrichtung 30 Verlagerungseinrichtungen 40 auf, die zur Einstellung der Position der Transportvorrichtung 30 in Z-Richtung dienen. Dazu ist jeder Bearbeitungsstation 16, 18, 20 eine Verlagerungseinrichtung 40 zugeordnet. Die Verlagerungseinrichtungen 40 der Bearbeitungsstationen 16, 18, 20 können miteinander synchronisiert sein. Über die Verlagerungseinrichtungen 40 kann die Transportvorrichtung 30 an verschiedene Durchmesser von zu bearbeitenden Werkstücken angepasst werden. Die Verlagerungseinrichtungen 40 können beispielsweise einen Schlitten zur Einstellung der Position in Z-Richtung aufweisen. Die Verlagerungseinrichtung 40 können unter einander beispielsweise über ein Getriebe oder ähnliches gekoppelt sein.

Die Bearbeitungsstationen 16, 18, 20 können Stationen zum Schleifen jeweils der Flanken, der Brust und des Rückens eines Zahns eines Kreissägeblattes 32 sein, wobei jede Station 16, 18, 20 eine der genannten Stellen eines Zahns bearbeitet.

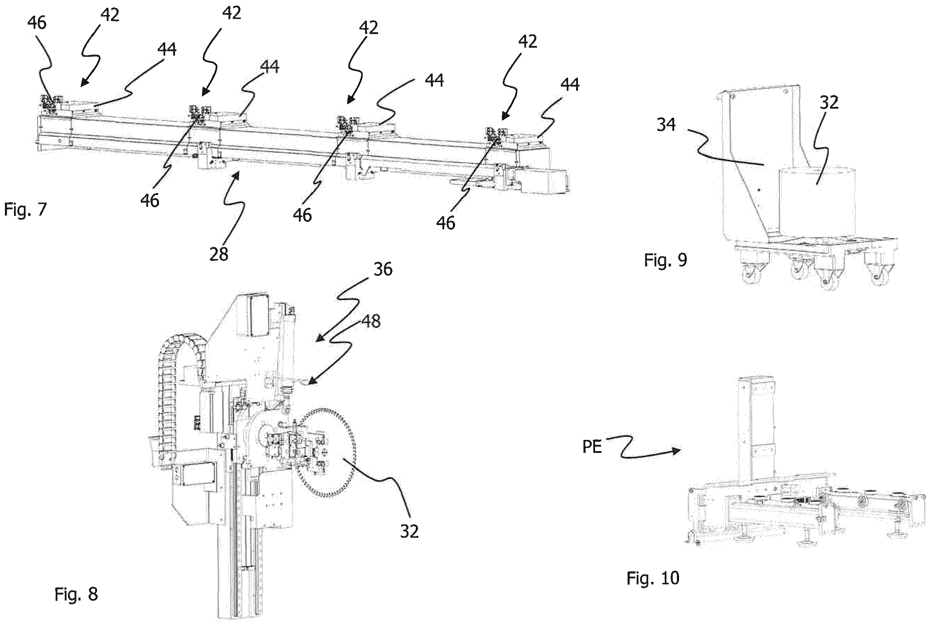

Figur 7 zeigt eine perspektivische Ansicht des Trägers 28 der Transportvorrichtung 30. Der Träger 28 weist vier Greifeinrichtungen 42 auf. Die Greifeinrichtungen 42 weisen jeweils einen Schlitten 44 und einen Greifer 46 auf. Der Schlitten 44 ist relativ zum Träger 28 verlagerbar. Insbesondere sind die Schlitten 44 mit den Greifern 46 quer zur Längsachse des Trägers 28 verlagerbar. Die Greifeinrichtungen 40 bzw. die Greifer 46 sind in regelmäßigen Abständen an dem Träger 28 angeordnet und dienen zum Greifen der Werkstücke bzw. zum Bedienen der Stationen 12 bis 20 (siehe Figur 1). Mit den Greifeinrichtungen 42 können die Werkstücke 32 an die einzelnen Stationen übergeben und von den einzelnen Stationen 12 bis 20 aufgenommen werden.

Figur 8 zeigt eine perspektivische Ansicht der Einrichtung 36 zum Anheben/Absenken bzw. Schwenken der Werkstücke 32. Die Einrichtung 36 weist verschiedene Zylinder oder alternativ nummerisch gesteuerte Achsen auf, mit denen die einzelnen Bewegungen der Einrichtung 36, d. h. eine Schwenkbewegung und eine Hebebewegung durchgeführt werden können. Die Zylindereinrichtungen sind allgemein mit 48 bezeichnet.

Figur 9 zeigt eine perspektivische Ansicht eines Wagens 34 mit Rollen und den daran aufgestapelten Werkstücken 32.

Figur 10 zeigt eine perspektivische Ansicht einer Positioniereinrichtung PE, mit der die Wagen 34 an der Aufnahmestation 12 bzw. der Abgabestation 14 in ihrer vorbestimmten Position gesichert und gehalten werden können. Die Wagen 34 werden dazu in die Positioniereinrichtung PE eingeschoben. Die Positioniereinrichtung PE ist zum Sicherstellen der exakten Positionierung der Wagen 34 vorgesehen, damit die Einrichtungen 36 die Werkstücke 32 an der dafür vorgesehenen Position aufnehmen oder abgeben können.

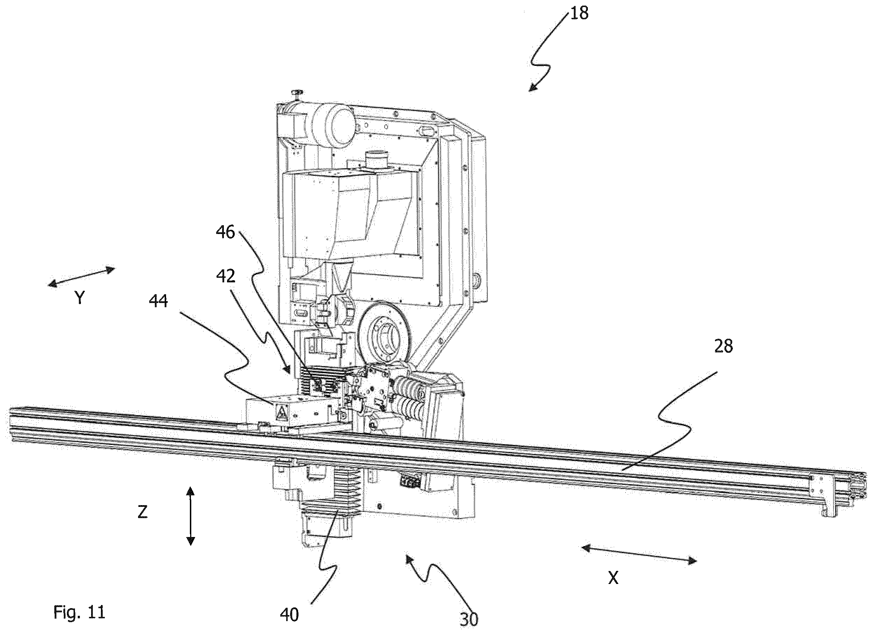

Figur 11 zeigt eine perspektivische Ansicht der Transportvorrichtung 30 und einer der Bearbeitungsstationen, beispielsweise die Bearbeitungsstation 18.

An dem Träger 28 der Transportvorrichtung 30 ist eine Greifeinrichtung 42 erkennbar. Die Greifeinrichtung 42 weist den Schlitten 44 auf. Der Schlitten 44 ist in Y-Richtung relativ zu dem Träger 28 verlagerbar. Der Schlitten 44 kann sich in Y-Richtung an die Bearbeitungsstation 18 zur Übergabe eines Werkstücks annähern oder von dieser entfernen. Der Träger 28 ist zusammen mit der Greifeinrichtung 42 in X-Richtung verlagerbar.

Der Bearbeitungsstation 18 ist eine in X- und Y-Richtung stationäre Verlagerungseinrichtung 40 zugeordnet, über die die Transportvorrichtung 30 in Z-Richtung verlagert werden kann. Anders ausgedrückt kann über die Verlagerungseinrichtung 40 die Position der Transportvorrichtung 30 in Z-Einrichtung eingestellt werden.

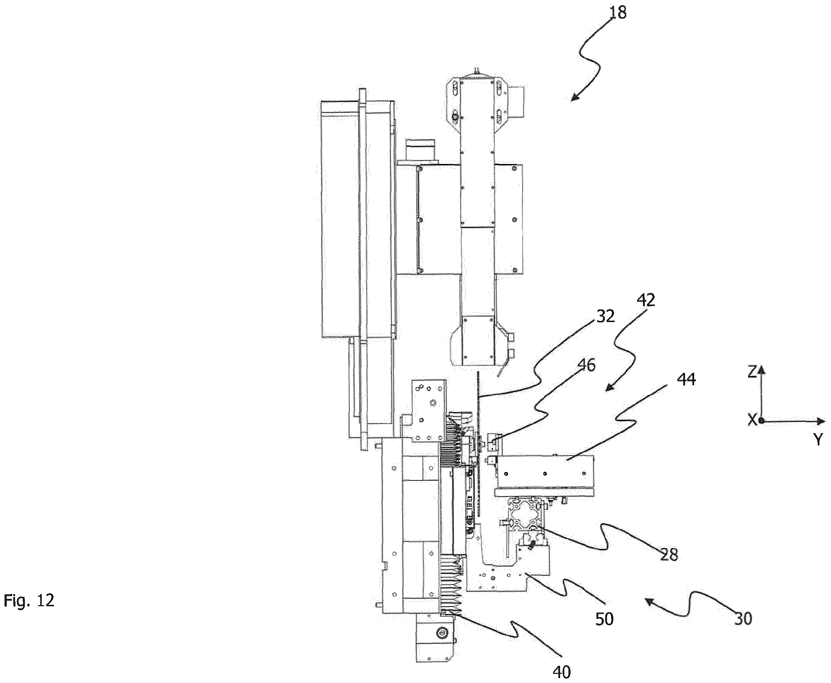

Figur 12 zeigt eine Seitenansicht der Transportvorrichtung 30 und einer der Bearbeitungsstationen, beispielsweise die Bearbeitungsstation 18.

Die Verlagerungseinrichtung 40 zur Einstellung der Position der Transportvorrichtung 30 in Z-Richtung ist der Bearbeitungsstation 18 zugeordnet. Die Verlagerungseinrichtung 40 ist über ein Verbindungselement 50 mit dem Träger 28 verbunden. Der Träger 28 kann relativ zu der Verlagerungseinrichtung 40 und zu dem Verbindungselement 50 in X-Richtung verlagert werden.

An dem Träger 28 ist die Greifeinrichtung 42 angeordnet, die den Schlitten 44 und den Greifer 46 aufweist. Der Schlitten 44 ist zusammen mit dem Greifer 46 in Y-Richtung verlagerbar. Dadurch kann der Greifer 46 ein Werkstück 32 an die Bearbeitungsstation 18 übergeben oder nach der Bearbeitung ein Werkstück 32 von der Bearbeitungsstation 18 übernehmen. Im Anschluss daran kann der Träger 28 mit der Greifeinrichtung 42 in X-Richtung zur nächsten Station (nicht gezeigt) verlagert werden.

## Patentansprüche

1. Vorrichtung (10) zum Bearbeiten von Werkstücken (32), insbesondere von Sägeblättern, mit:
- wenigstens einer Aufnahmestation (12) zum Aufnehmen wenigstens eines Werkstücks (32), das zur Bearbeitung vorgesehen ist,
- wenigstens einer Abgabestation (14) zum Abgeben wenigstens eines Werkstücks (32) nach der Bearbeitung,
- wenigstens einer Bearbeitungsstation (16, 18, 20) zur Bearbeitung wenigstens eines Werkstücks (32), wobei die wenigstens eine Bearbeitungsstation (16, 18, 20) zwischen der Aufnahmestation (12) und der Abgabestation (14) angeordnet ist, und
- wenigstens einer Transportvorrichtung (30) zum Transportieren wenigstens eines Werkstücks (32) zwischen den Stationen (12, 14, 16, 18, 20),
wobei die wenigstens eine Transportvorrichtung (30) derart ausgebildet ist, dass sie wenigstens ein Werkstück (32) von einer Station (12, 14, 16, 18, 20) zur nächsten Station (12, 14, 16, 18, 20) transportiert, wobei jeweils zumindest zwei Stationen (12, 14, 16, 18, 20) von der wenigstens einen Transportvorrichtung (30) gleichzeitig zur Werkstückübergabe ansteuerbar sind, wobei sich bei der wenigstens einen Bearbeitungsstation (16, 18, 20) die wenigstens eine Transportvorrichtung (30) in eine Position bewegt, an der eine Bearbeitungsstation (16, 18, 20) mit einem Werkstück (32) bestückt oder an der nach der Bearbeitung das Werkstück (32) aufgenommen werden kann, und wobei bei einer Aufnahmestation (12) das Werkstück (32) aufgenommen wird und bei der Abgabestation (14) das Werkstück (32) abgegeben wird, wobei die wenigstens eine Transportvorrichtung (30) derart ausgebildet ist, dass sie sich linear in einer ersten Bewegungsrichtung (X) relativ zu den Stationen (16, 18, 20) bewegt, wobei die wenigstens eine Transportvorrichtung (30) derart ausgebildet ist, dass wenigstens ein Werkstück (32) zur Aufnahme oder Übergabe an wenigstens eine Station (12, 14, 16, 18, 20) in wenigstens einer zweiten Bewegungsrichtung (Y) relativ zu wenigstens dieser Station (12, 14, 16, 18, 20) verlagerbar ist, **dadurch, gekennzeichnet dass** die wenigstens eine Transportvorrichtung (30) derart ausgebildet ist, dass die wenigstens eine Transportvorrichtung (30) in einer dritten Bewegungsrichtung (Z) verlagerbar ist, wobei in der dritten Bewegungsrichtung die Position der wenigstens einen Transportvorrichtung (30) in vertikaler Richtung einstellbar ist.

2. Vorrichtung (10) nach Anspruch 1,
wobei die wenigstens eine Transportvorrichtung (30) derart ausgebildet ist, dass entweder die wenigstens eine Aufnahmestation (12) oder die wenigstens eine Abgabestation (14) und zusätzlich wenigstens eine Bearbeitungsstation (16, 18, 20) von der wenigstens einen Transportvorrichtung (30) zur Werkstückübergabe ansteuerbar sind.

3. Vorrichtung (10) nach Anspruch 1 oder 2,
wobei die wenigstens eine Transportvorrichtung (30) derart ausgebildet ist, dass sie sich zwischen der wenigstens einen Aufnahmestation (12) und der wenigstens eine Abgabestation (14) hin und her bewegt.

4. Vorrichtung (10) nach einem der Ansprüche 1 bis 3,
wobei die wenigstens eine Transportvorrichtung (30) wenigstens eine Greifeinrichtung (42) zum Greifen wenigstens eines Werkstücks (32) aufweist.

5. Vorrichtung (10) nach einem der Ansprüche 1 bis 4,
wobei die wenigstens eine Aufnahmestation (12) und/oder die wenigstens eine Abgabestation (14) wenigstens eine Einrichtung (36) zum Anheben und Absenken wenigstens eines Werkstücks (32) aufweist.

6. Vorrichtung (10) nach einem der Ansprüche 1 bis 5,
wobei die wenigstens eine Aufnahmestation (12) und/oder die wenigstens eine Abgabestation (14) wenigstens eine Schwenkeinrichtung (36) zum Schwenken wenigstens eines Werkstücks (32) aus einer horizontalen Lage in eine vertikale Lage oder umgekehrt aufweist.

7. Vorrichtung (10) nach einem der Ansprüche 1 bis 6,
wobei die wenigstens eine Transportvorrichtung (30) wenigstens einen Träger (28) aufweist, der zumindest die Distanz zwischen zwei Bearbeitungsstationen (16, 18, 20) überspannt.

8. Vorrichtung (10) nach einem der Ansprüche 1 bis 7,
wobei die wenigstens eine Bearbeitungsvorrichtung (16, 18, 20) wenigstens eine Werkstückaufnahme aufweist.

9. Vorrichtung (10) nach einem der Ansprüche 1 bis 8,
wobei eine Mehrzahl von Bearbeitungsstationen (16, 18, 20) vorgesehen ist, wobei die wenigstens eine Transportvorrichtung (30) eine Mehrzahl von Greifeinrichtungen (40) aufweist, wobei die Anzahl von Greifeinrichtung (42) um 1 größer ist als die Anzahl der Bearbeitungsstationen (16, 18, 20).

10. Vorrichtung (10) nach einem der Ansprüche 1 bis 9,
wobei die wenigstens eine Bearbeitungsstation (16, 18, 20) in einem Gehäuse (22) aufgenommen ist, an dem auch wenigstens eine Aufnahmestelle (24) der wenigstens einen Aufnahmestation (12) und wenigstens eine Abgabestelle (26) der wenigstens einen Abgabestation (14) ausgebildet sind.

## Claims

1. An apparatus (10) for machining workpieces (32), in particular saw blades, comprising:
- at least one pick-up station (12) for picking up at least one workpiece (32) which is to be machined,
- at least one discharge station (14) for discharging at least one workpiece (32) after machining,
- at least one machining station (16, 18, 20) for machining at least one workpiece (32), wherein the at least one machining station (16, 18, 20) is arranged between the pick-up station (12) and the discharge station (14), and
- at least one transport device (30) for transporting at least one workpiece (32) between the stations (12, 14, 16, 18, 20),
wherein the at least one transport device (30) is configured in such a manner that it transports at least one workpiece (32) from one station (12, 14, 16, 18, 20) to the next station (12, 14, 16, 18, 20), wherein the at least one transport device (30) simultaneously heads for at least two stations (12, 14, 16, 18, 20) to transfer the workpiece, wherein at the at least the one machining station (16, 18, 20) the at least one transport device (30) moves into a position, in which a machining station (16, 18, 20) may be loaded with a workpiece (32) or in which the workpiece (32) may be picked up after machining, and wherein in a pick-up station (12) the workpiece (32) is picked up and in the discharge station (14) the workpiece (32) is discharged, wherein the at least one transport device (30) is configured in such a manner that it moves linearly in a first direction of movement (X) relative to the stations (16, 18, 20), wherein the at least one transport device (30) is configured in such a manner that at least one workpiece (32) is movable for pick-up or transfer to at least one station (12, 14, 16, 18, 20) in at least a second direction of movement (Y) relative to at least this station (12, 14, 16, 18, 20),
**characterised in that**
the at least one transport device (30) is configured in such a manner that the at least one transport device (30) is movable in a third direction of movement (Z), wherein in the third direction of movement the position of the at least one transport device (30) is adjustable in the vertical direction.

2. The apparatus (10) according to Claim 1,
wherein the at least one transport device (30) is configured in such a manner that either the at least one pick-up station (12) or the at least one discharge station (14) and additionally at least one machining station (16, 18, 20) cooperate with the at least one transport device (30) for transferring a workpiece.

3. The apparatus (10) according to Claim 1 or 2,
wherein the at least one transport device (30) is configured in such a manner that it moves to an fro between the at least one pick-up station (12) and the at least one discharge station (14).

4. The apparatus (10) according to any of Claims 1 to 3,
wherein the at least one transport device (30) comprises at least one gripping device (42) for gripping at least one workpiece (32).

5. The apparatus (10) according to any of Claims 1 to 4,
wherein the at least one pick-up station (12) and/or the at least one discharge station (14) comprises at least one device (36) for lifting and lowering at least one workpiece (32).

6. The apparatus (10) according to any of Claims 1 to 5,
wherein the at least one pick-up station (12) and/or the at least one discharge station (14) comprises at least one pivoting device (36) for pivoting at least one workpiece (32) from a horizontal position into a vertical position and vice versa.

7. The apparatus (10) according to any of Claims 1 to 6,
wherein the at least one transport device (30) comprises at least one beam (28) which spans at least the distance between two machining stations (16, 18, 20).

8. The apparatus (10) according to any of Claims 1 to 7,
wherein the at least one machining station (16, 18, 20) comprises at least one workpiece holder.

9. The apparatus (10) according to any of Claims 1 to 8,
wherein a plurality of machining stations (16, 18, 20) is provided, wherein the at least one transport device (30) comprises a plurality of gripping devices (42), wherein the number of gripping devices (42) is by 1 higher than the number of machining stations (16, 18, 20).

10. The apparatus (10) according to any of Claims 1 to 9,
wherein at least one machining station (16, 18, 20) is accommodated in a housing (22) in which also at least one pick-up location (24) of the at least one pick-up station (12) and at least one discharge location (26) of the at least one discharge station (14) are formed.

## Revendications

1. Dispositif (10) d'usinage de pièces à usiner (32), en particulier de lames de scie, comprenant :
- au moins une station de réception (12) pour recevoir au moins une pièce à usiner (32), qui doit être usinée,
- au moins une station de dépôt (14) pour déposer au moins une pièce à usiner (32) une fois l'usinage terminé,
- au moins une station d'usinage (16, 18, 20) pour usiner au moins une pièce à usiner (32), ladite station d'usinage (16, 18, 20) étant disposée entre la station de réception (12) et la station de dépôt (14), et
- au moins un dispositif de transport (30) pour transporter au moins une pièce à usiner (32) entre les stations (12, 14, 16, 18, 20),
ladite station de transport (30) étant conçue de sorte qu'elle transporte au moins une pièce à usiner (32) d'une station (12, 14, 16, 18, 20) à la station suivante (12, 14, 16, 18, 20), au moins deux stations respectives (12, 14, 16, 18, 20) étant commandées par ledit dispositif de transport (30) en même temps vers le transfert de pièces à usiner, au niveau de ladite station d'usinage (16, 18, 20) ledit dispositif de transport (30) se déplace dans uneposition, à laquelle une station d'usinage (16, 18, 20) est pourvue d'une pièce à usiner (32) ou à laquelle après l'usinage la pièce usinée (32) peut être réceptionnée, et au niveau d'une station de réception (12) la pièce usinée (32) est réceptionnée et au niveau de la station de dépôt (14) la pièce usinée (32) peut être déposée, ledit dispositif de transport (30) étant conçu de sorte qu'il se déplace linéairement dans un premier sens de déplacement (X) par rapport aux stations (16, 18, 20), ledit dispositif de transport (30) étant conçu de telle sorte qu'au moins une pièce à usiner (32) peut être transférée pour réception ou transfert à au moins une station (12, 14, 16, 18, 20) dans au moins un second sens de déplacement (Y) par rapport à au moins cette station (12, 14, 16, 18, 20),
**caractérisé en ce que**
ledit dispositif de transport (30) est conçu de telle sorte que ledit dispositif de transport (30) peut se déplacer dans un troisième sens de déplacement (Z), dans le troisième sens de déplacement la position dudit dispositif de transport (30) étant réglable à la verticale.

2. Dispositif (10) selon la revendication 1, ledit dispositif de transport (30) étant conçu de telle sorte que soit ladite station de réception (12) soit ladite station de dépôt (14) et en plus au moins une station d'usinage (16, 18, 20) peuvent être commandée par ledit dispositif de transport (30) pour le transfert de pièce.

3. Dispositif (10) selon la revendication 1 ou la revendication 2, ledit dispositif de transport (30) étant conçu de telle sorte qu'il peut faire le va-et-vient entre ladite station de réception (12) et ladite station de dépôt (14).

4. Dispositif (10) selon la revendication selon l'une quelconque des revendications 1 à 3, ledit dispositif de transport (30) présentant au moins un dispositif de préhension (42) pour saisir au moins une pièce à usiner (32).

5. Dispositif (10) selon l'une quelconque des revendications 1 à 4, ledit dispositif de réception (12) et/ou ladite station de dépôt (14) présentant au moins un dispositif (36) pour soulever et abaisser au moins une pièce à usiner (32).

6. Dispositif (10) selon l'une quelconque des revendications 1 à 5, ladite station de réception (12) et/ou ladite station de dépôt (14) présentant au moins un dispositif de pivotement (36) pour faire pivoter au moins une pièce à usiner (32) depuis une position horizontale dans une position verticale ou inversement.

7. Dispositif (10) selon l'une quelconque des revendications 1 à 6, ledit dispositif de transport (30) présentant un support (28) qui enjambe au moins la distance entre deux stations d'usinage (16, 18, 20).

8. Dispositif (10) selon l'une quelconque des revendications 1 à 7, ledit dispositif d'usinage (16, 18, 20) comprenant au moins une réception de pièces.

9. Dispositif (10) selon l'une quelconque des revendications 1 à 8, une pluralité de stations d'usinage (16, 18, 20) est prévue, ledit dispositif de transport (30) présentant une pluralité de dispositif de préhension (40), le nombre de dispositif de préhension (42) étant de 1 supérieur au nombre des stations d'usinage (16, 18, 20).

10. Dispositif (10) selon l'une quelconque des revendications 1 à 9, ladite station d'usinage (16, 18, 20) étant logée dans un boîtier, sur lequel sont au moins également conçues une position de réception (24) de ladite station de réception (12) et au moins une station position de dépôt (26) de ladite station de dépôt (14).
